(19) Europäisches Patentamt
European Patent Office
Office européen des brevets

(11) **EP 4 645 912 A1**

(12) **EUROPEAN PATENT APPLICATION**
published in accordance with Art. 153(4) EPC

(43) Date of publication:
**05.11.2025 Bulletin 2025/45**

(21) Application number: **23910333.6**

(22) Date of filing: **21.12.2023**

(51) International Patent Classification (IPC):
**H04W 4/02** (2018.01)   **H04W 74/08** (2024.01)

(52) Cooperative Patent Classification (CPC):
**H04J 13/00; H04W 4/02; H04W 74/00;**
**H04W 74/08; H04W 74/0833**

(86) International application number:
**PCT/CN2023/140558**

(87) International publication number:
**WO 2024/140405 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022  CN 202211721347**

(71) Applicant: **Datang Mobile Communications
Equipment Co., Ltd.
Beijing 100085 (CN)**

(72) Inventors:
• **YE, Xijin
  Beijing 100085 (CN)**
• **BAI, Wei
  Beijing 100085 (CN)**

(74) Representative: **Studio Torta S.p.A.
Via Viotti, 9
10121 Torino (IT)**

(54) **RANDOM ACCESS PREAMBLE SEQUENCE GENERATION METHOD, DEVICE AND
APPARATUS, AND STORAGE MEDIUM**

(57)    The present disclosure provides a random access preamble sequence generation method and apparatus, a device, and a storage medium, relating to the field of communication technology. In the present disclosure, the terminal receives candidate cyclic shift values and corresponding candidate preamble root sequences sent by a network device; where the candidate cyclic shift values are determined by the network device based on partitioned cell granularity information, the candidate preamble root sequences are allocated by the network device for the candidate cyclic shift values, and the number of the candidate preamble root sequences is determined based on a synthesis of preamble sequence resources of a cell and the number of the candidate cyclic shift values; the terminal selects a target cyclic shift value and a corresponding target preamble root sequence from the candidate cyclic shift values and the corresponding candidate preamble root sequences based on location information of the terminal itself in the cell; and generates a random access preamble sequence based on the target cyclic shift value and the target preamble root sequence. Due to the reduction in the number of required preamble root sequences in the cell, the cross-correlation interference of the preamble sequences is reduced, and the preamble detection performance and the access performance are improved.

FIG. 7

Receive candidate cyclic shift values and corresponding candidate preamble root sequences sent by a network device; where the candidate cyclic shift values are determined based on partitioned cell granularity information, the candidate preamble root sequences are allocated for the candidate cyclic shift values, and the number of the candidate preamble root sequences is determined based on the total number of preamble sequence resources of a cell and the number of the candidate cyclic shift values — S700

Select a target cyclic shift value and a corresponding target preamble root sequence from the candidate cyclic shift values and the corresponding candidate preamble root sequences based on location information of the terminal itself in the cell — S701

Generate a random access preamble sequence based on the target cyclic shift value and the target preamble root sequence — S702

**Description**

**CROSS-REFERENCE TO RELATED APPLICATION**

This application claims priority to Chinese Patent Application No. 202211721347.6, filed to the China National Intellectual Property Administration on December 30, 2022 and entitled "Random Access Preamble Sequence Generation Method and Apparatus, Device, and Storage Medium", which is hereby incorporated by reference in its entirety.

**TECHNICAL FIELD**

The present disclosure relates to the field of communication technology and, in particular, to a random access preamble sequence generation method and apparatus, a device, and a storage medium.

**BACKGROUND**

Random access is a fundamental process in a mobile communication system, which is used to achieve uplink time synchronization for terminals and establish initial wireless links. During a random access process, a terminal needs to first send a preamble sequence to a network device, and the network device detects the preamble sequence to achieve time synchronization and establish an initial wireless link. Therefore, the preamble sequence sent by the terminal and preamble detection performance of the network device will affect the access rate directly.

Currently, in a mMTC (Massive Machine Type Communication, Massive Machine Type Communication) scenario of the 6G mobile communication network, the service type mainly includes small data packets. To avoid severely impacting spectrum efficiency, the preamble sequence needs to be set as not excessively long. At the same time, in the mMTC scenario of the 6G mobile communication network, there are massive terminals, and the communication scale thereof has increased tenfold or more compared to that of the 5G mobile communication network. Therefore, it will inevitably require more preamble sequence resources; otherwise, serious preamble collision issues will arise.

Due to the excellent properties of ZC (Zadoff-Chu) root sequences, such as constant amplitude, zero autocorrelation, and low cross-correlation, the ZC root sequences are usually used to generate preamble sequences. Consequently, as the number of preamble sequence resources increases and the length of the preamble sequences is limited, the number of the ZC root sequences required by the cell will also increase. Thus, in the case of massive terminals, although the cross-correlation between two coprime ZC root sequences is very low, the number of preamble sequences determined based on different ZC root sequences transmitted simultaneously is large. This will lead to the gradual accumulation of this low cross-correlation and become serious cross-correlation interference that cannot be ignored, causing a decrease in preamble detection performance and further affecting access performance.

Therefore, in the 6G mMTC scenario, how to reduce the cross-correlation interference of the preamble sequences, enhance the preamble detection performance, and improve the access performance is a technical problem that needs to be solved at present.

**SUMMARY**

The present disclosure provides a random access preamble sequence generation method and apparatus, a device, and a storage medium, aimed at reducing the cross-correlation interference of preamble sequences, improving the preamble detection performance, and enhancing the access performance in the 6G mMTC scenario.

In a first aspect, an embodiment of the present disclosure provides a random access preamble sequence generation method, applied to a terminal, which includes:

receiving candidate cyclic shift values and corresponding candidate preamble root sequences sent by a network device; where the candidate cyclic shift values are determined based on partitioned cell granularity information, the candidate preamble root sequences are allocated for the candidate cyclic shift values, and the number of the candidate preamble root sequences is determined based on the total number of preamble sequence resources of a cell and the number of the candidate cyclic shift values;
selecting a target cyclic shift value and a corresponding target preamble root sequence from the candidate cyclic shift values and the corresponding candidate preamble root sequences based on location information of the terminal itself in the cell;
generating a random access preamble sequence based on the target cyclic shift value and the target preamble root sequence.

In one possible implementation, the receiving the candidate cyclic shift values and the corresponding candidate preamble root sequences sent by the network device includes:

receiving a SIB1 (System Information Block 1, System Information Block 1) broadcasted by the network device, where the servingCellConfigCommon (service cell common configuration) parameter in SIB1 carries the candidate cyclic shift values and the corresponding candidate preamble root sequences.

In one possible implementation, the location information of the terminal itself in the cell is determined by the following:

determining a target RSRP (Reference Signal Receiving Power, Reference Signal Receiving Power) of the terminal; determining the location information of the terminal itself in the cell based on a relationship between the target RSRP and a preset RSRP.

In one possible implementation, the selecting the target cyclic shift value and the corresponding target preamble root sequence from the candidate cyclic shift values and the corresponding candidate preamble root sequences based on the location information of the terminal itself in the cell includes:

in case that the location information indicates that the terminal is located at a center of the cell, selecting, from the candidate cyclic shift values and the corresponding candidate preamble root sequences, a smallest candidate cyclic shift value as the target cyclic shift value and determining the target preamble root sequence corresponding to the target cyclic shift value; or

in case that the location information indicates that the terminal is located at an edge of the cell, selecting, from the candidate cyclic shift values and the corresponding candidate preamble root sequences, a largest candidate cyclic shift value as the target cyclic shift value and determining the target preamble root sequence corresponding to the target cyclic shift value.

In one possible implementation, the number of the candidate preamble root sequences is determined by the following:

determining the number of preamble sequence resources corresponding to each candidate cyclic shift value based on the total number of the preamble sequence resources and the number of the candidate cyclic shift values;

determining a ratio between a corresponding number of the preamble sequence resources and a corresponding number of orthogonal preamble sequences for each candidate cyclic shift value;

determining the number of the candidate preamble root sequences based on a sum of ratios corresponding to all the candidate cyclic shift values.

In a second aspect, an embodiment of the present disclosure provides a random access preamble sequence generation method, applied to a network device, which includes:

determining candidate cyclic shift values corresponding to a cell based on partitioned cell granularity information, and allocating corresponding candidate preamble root sequences for the candidate cyclic shift values; where the number of the candidate preamble root sequences is determined based on the total number of preamble sequence resources of the cell and the number of the candidate cyclic shift values;

sending the candidate cyclic shift values and the corresponding candidate preamble root sequences to a terminal in the cell, where the candidate cyclic shift values include a target cyclic shift value corresponding to location information of the terminal in the cell, the candidate preamble root sequences include a target preamble root sequence corresponding to the location information of the terminal in the cell, and the target preamble root sequence and the target cyclic shift value are used to determine a random access preamble sequence.

In one possible implementation, the sending the candidate cyclic shift values and the corresponding candidate preamble root sequences to the terminal includes:

adding the candidate cyclic shift values and the corresponding candidate preamble root sequences in a serving-CellConfigCommon parameter of a SIB1;

broadcasting the SIB1 to the terminal.

In one possible implementation, the determining the candidate cyclic shift values corresponding to the cell based on the partitioned cell granularity information includes:

determining a radius of each partitioned area based on the partitioned cell granularity information;

determining cyclic shift values corresponding to respective partitioned areas based on the radius of each partitioned area;

using the cyclic shift values corresponding to the respective partitioned areas as the candidate cyclic shift values corresponding to the cell.

In one possible implementation, the number of the candidate preamble root sequences is determined by the following:

determining the number of preamble sequence resources corresponding to each candidate cyclic shift value based on the total number of the preamble sequence resources and the number of the candidate cyclic shift values;

determining a ratio between a corresponding number of the preamble sequence resources and a corresponding number of orthogonal preamble sequences for each candidate cyclic shift value;

determining the number of the candidate preamble root sequences based on a sum of ratios corresponding to all the candidate cyclic shift values.

In a third aspect, an embodiment of the present disclosure provides a terminal, where the terminal includes: a memory, a transceiver, and a processor; where the memory is configured to store a computer program; the transceiver is configured to transmit and receive data under control of the processor; and the processor is configured to read the computer program in the memory and perform steps of the random access preamble sequence generation method as described in the first aspect.

In a fourth aspect, an embodiment of the present disclosure provides a network device, where the network device includes: a memory, a transceiver, and a processor; where the memory is configured to store a computer program; the transceiver is configured to transmit and receive data under control of the processor; and the processor is configured to read the computer program in the memory and perform steps of the random access preamble sequence generation method as described in the second aspect.

In a fifth aspect, an embodiment of the present disclosure provides a random access preamble sequence generation apparatus, applied to a terminal, where the apparatus includes:

a receiving module, configured to receive candidate cyclic shift values and corresponding candidate preamble root sequences sent by a network device; where the candidate cyclic shift values are determined based on partitioned cell granularity information, the candidate preamble root sequences are allocated for the candidate cyclic shift values, and the number of the candidate preamble root sequences is determined based on the total number of preamble sequence resources of a cell and the number of the candidate cyclic shift values;

a selecting module, configured to select a target cyclic shift value and a corresponding target preamble root sequence from the candidate cyclic shift values and the corresponding candidate preamble root sequences based on location information of the terminal itself in the cell;

a generating module, configured to generate a random access preamble sequence based on the target cyclic shift value and the target preamble root sequence.

In a sixth aspect, an embodiment of the present disclosure provides a random access preamble sequence generation apparatus, applied to a network device, where the apparatus includes:

a determining module, configured to determine candidate cyclic shift values corresponding to a cell based on partitioned cell granularity information, and allocate corresponding candidate preamble root sequences for the candidate cyclic shift values; where the number of the candidate preamble root sequences is determined based on the total number of preamble sequence resources of the cell and the number of the candidate cyclic shift values;

a sending module, configured to send the candidate cyclic shift values and the corresponding candidate preamble root sequences to a terminal in the cell, where the candidate cyclic shift values include a target cyclic shift value corresponding to location information of the terminal in the cell, the candidate preamble root sequences include a target preamble root sequence corresponding to the location information of the terminal in the cell, and the target preamble root sequence and the target cyclic shift value are used to determine a random access preamble sequence.

In a seventh aspect, an embodiment of the present disclosure provides a computer-readable storage medium, which stores computer instructions that, when executed by a processor, implement steps of the random access preamble sequence generation method provided by the embodiment of the present disclosure.

The beneficial effects of the present disclosure are as follows.

The embodiments of the present disclosure provide a random access preamble sequence generation method and apparatus, a device, and a storage medium, relating to the field of communication technology. In the present disclosure, since the terminal selects the target cyclic shift value and the corresponding candidate preamble root sequence from the candidate cyclic shift values and the corresponding candidate preamble root sequences sent by the network device, it can prevent the terminal from selecting an incorrect cyclic shift value and a corresponding preamble root sequence; and when selecting the target cyclic shift value and the corresponding target preamble root sequence, the terminal performs the selection based on location information of the terminal itself in the cell, further generates the random access preamble sequence based on the target cyclic shift value and the target preamble root sequence, preventing the terminal from failing to access due to selecting a smaller cyclic shift value and a corresponding preamble root sequence, as well as preventing the exacerbation of preamble collisions and cross-correlation interference of preamble sequences due to selecting a larger cyclic shift value and a corresponding preamble root sequence. Where the candidate cyclic shift values are determined by the network device based on the partitioned cell granularity information, and the candidate preamble root sequences are allocated by the network device for the candidate cyclic shift values, with the number of the candidate preamble root sequences are determined based on the total number of the preamble sequence resources of the cell and the number of the candidate cyclic shift values. The number of the cyclic shift values determined based on the partitioned cell granularity information is greater than that determined by related implementations, and further, the number of the candidate preamble root sequences determined based on multiple candidate cyclic shift values and the total number of preamble sequence resources of the cell is reduced compared to the number of the candidate preamble root sequences determined by related implementations. Under the condition of the reduction of the number of the required preamble root sequences in the cell, it further reduces the cross-correlation interference of the preamble sequences, enhances the preamble detection performance, and improves the access performance.

Other features and advantages of the present disclosure will be elaborated in the subsequent specification, and some of them will become apparent from the specification or be understood through the implementation of the present disclosure. The objectives and other advantages of the present disclosure can be achieved and obtained through structures specifically pointed out in the specification, claims, and drawings.

## BRIEF DESCRIPTION OF DRAWINGS

In order to more clearly illustrate the technical solutions in the embodiments of the present disclosure, a brief introduction to the drawings required in the description of the embodiments will be made. It is evident that the drawings described below are merely some embodiments of the present disclosure, and for those of ordinary skill in the art, other drawings can be obtained based on these drawings without creative effort.

FIG. 1 is a schematic diagram of a cyclic shift in an embodiment of the present disclosure.
FIG. 2 is a schematic diagram of an application scenario provided by an embodiment of the present disclosure.
FIG. 3 is a flowchart of a specific implementation for generating a random access preamble sequence provided by an embodiment of the present disclosure.
FIG. 4 is a schematic diagram of a relationship between a distance and a reference signal reception power provided by an embodiment of the present disclosure.
FIG. 5 is a schematic diagram of analysis of collision probability of a preamble sequence provided by an embodiment of the present disclosure.
FIG. 6 is a flowchart of a specific implementation for random access provided by an embodiment of the present disclosure.
FIG. 7 is a flowchart of a random access preamble sequence generation method provided by an embodiment of the present disclosure.
FIG. 8 is a flowchart of another random access preamble sequence generation method provided by an embodiment of the present disclosure.
FIG. 9 is a structural diagram of a terminal provided by an embodiment of the present disclosure.
FIG. 10 is a structural diagram of a network device provided by an embodiment of the present disclosure.
FIG. 11 is a structural diagram of a random access preamble sequence generation apparatus provided by an embodiment of the present disclosure.
FIG. 12 is a structural diagram of another random access preamble sequence generation apparatus provided by an embodiment of the present disclosure.

## DESCRIPTION OF EMBODIMENTS

In order to make the objectives, technical solutions, and beneficial effects of the present disclosure clearer, the following will clearly and completely describe the technical solutions in the embodiments of the present disclosure in conjunction with the drawings in the embodiments of the present disclosure. It is evident that the described embodiments are merely part of the embodiments of the present disclosure and not all the embodiments. All other embodiments obtained by those of ordinary skill in the art without making creative efforts based on the embodiments of the present disclosure fall within the protection scope of the present disclosure.

The following explains some terms in the embodiments of the present disclosure to facilitate understanding by those skilled in the art.

Broadcast messages are designed to ensure that a terminal can normally reside in a cell that can provide services thereto, providing necessary public channel information for UE to access to the network and ensuring its mobility in a non-connected state. And in order to utilize network resources more reasonably, the transmission of the broadcast messages is divided into periodic broadcast types and on-demand (on-demand) broadcast types based on UE requests. According to the importance of broadcast information content, system information can be distinguished as minimum system information (Minimum SI) and other system information (Other SI); where the Minimum SI includes master information block (Master Information Block, MIB) and a SIB1, which are transmitted via a broadcast channel (Broadcast CHannel, BCH) and a downlink-shared channel (DownLink-Shared Channel, DL-SCH), respectively. The transmission method is a periodic broadcast manner; while other SIBs are collectively referred to as Other SI, containing all system information other than Minimum SI, that is, a SIB2 to a SIB9. The transmission method may be either as periodic broadcasts or on-demand (on-demand) broadcasts based on UE requests.

Among them, the minimum system information MIB contains information related to the cell's prohibited state, as well as multiple physical layer parameters required to obtain the SIB1 for the current cell. For specific content, see Table 1:

Table 1

| Information Field | The number of Bits (bit) | Description |
|---|---|---|
| systemFrameNumber | 6 | The highest 6 bits of the system frame number (The lowest 4 bits of the system frame number are provided in a PBCH (Physical Broadcast Channel, Physical Broadcast Channel)). |
| subCarrierSpacingCommon | 1 | Indicating a subcarrier spacing used for the SIB1, initial access Msg2/4, and broadcast message transmission; FR1: candidate values include 15kHz and 30kHz; FR2: candidate values include 60kHz and 120kHz. |
| ssb-SubcarrierOffset | 4 | Indicating a subcarrier offset between a SSB (Synchronization Signal and PBCH block, Synchronization block) and a CRB (Common Resource Block, Common Resource Block). |
| dmrs-TypeA-Position | 1 | Indicating positions of a Type A PDSCH (Physical Downlink Shared Channel, Physical Downlink Shared Channel) and the first DM-RS (Demodulation Reference Signal, Demodulation Reference Signal), OFDM (Orthogonal Frequency Division Multiplexing, Orthogonal Frequency Division Multiplexing) symbols 2 or 3. |
| pdcch-ConfigSIB 1 | 8 | Indicating time-frequency domain parameters of the control channel for SIB1. |
| cellBarred | 1 | Indicating whether staying in this cell is allowed. |
| intraFreqReselection | 1 | Indicating whether cell reselection is allowed on the same frequency when the optimal cell on the frequency point prohibits UE to access or is treated as a prohibited access cell by the UE. |
| Spare | 1 | Reserved bits. |

SIB1, also known as RMSI (Remaining Minimum SI), refers to the remaining minimum system messages other than MIB, containing some special system configuration information for this cell, such as scheduling information for each SIB in Other SI, and various parameters required for initial access. For specific content, see Table 2:

Table 2

| Information Field | Description |
|---|---|
| cellSelectionInfo | Cell selection related parameters. Including thresholds and offset coefficients for cell signal strength and signal quality in UL (Uplink, Uplink) and/or SUL (Supplementary Uplink, Supplementary Uplink) carriers. |
| cellAccessRelatedInfo | Cell access related parameters.<br>To reduce overhead, it contains a nested two-level PLMN (Public Land Mobile Network, Public Land Mobile Network) list: the upper-level list can be divided for different PLMNs, where PLMNs with consistent content are grouped together, aside from the PLMN ID; and the lower-level list provides information values such as a specific tracking area code (TAC), a RAN area ID, and a cell ID for PLMNs with consistent content. |
| connEstFailureControl | Additional parameters and effective time for the scenario of multiple connection failures.<br>If the UE reaches the configured number of connection establishment failures, this additional parameter can be applied for a period of time to encourage the UE to reselect other cells and successfully establish a connection. |
| si-SchedulingInfo | System information scheduling related information.<br>Containing all scheduling and usage rule parameters for Other SI (a mapping relationship between SIB and SI, a period, a SI time window length), status indication information si-BroadcastStatus for whether each SIB is currently being transmitted, system information area ID, and configuration information for SI that is broadcasted only upon UE request. |
| servingCellConfigCommon | Service cell common configuration. Containing cell-level parameters for the UE service cell: uplink and downlink carrier information and configurations for each physical channel, a timing advance offset, a position of the SSB in the Burst, a SSB transmission period, a position of the first DM-RS for a Type A PDSCH, a rate matching related parameter, a TDD uplink-downlink configuration, a SSB transmission power, etc. |
| ims-EmergencySupport | Whether ims-Emergency is supported. |
| eCallOverIMS-Support | Whether eCallOverIMS is supported. |
| ue-TimersAndConstants | Configuration parameters for various timers and counters used by the UE, which includes T300, T301, T310, n310, T311, n311, T319. |
| uac-BarringInfo | UAC (Unified Access Control, Unified Access Control) related configuration. Including access control parameters corresponding to various explicit and implicit UAC categories under different PLMNs. |
| useFullResumeID | Indicating whether the resume ID carried in the RRCResumeRequest message initiated by the UE is a complete 40-bit or a truncated 24-bit. Different lengths of resume IDs correspond to RRCResumeRequest messages in different lengths, which can be flexibly applied in channel environments in different levels. |

SIB2~SIB9 respectively contains the following system information. For specific content, see Table 3:

Table 3

| SIB2 | Cell reselection related information | The reselection messages of the system information block include industrial messages for co-frequency, inter-frequency, and inter-system, a current serving cell message for cell reselection, and some messages for cofrequency cell reselection. |
|---|---|---|
| SIB3 | Co-frequency cell reselection message | Providing a list of co-frequency neighboring cells. |

(continued)

| SIB2 | Cell reselection related information | The reselection messages of the system information block include industrial messages for co-frequency, inter-frequency, and inter-system, a current serving cell message for cell reselection, and some messages for cofrequency cell reselection. |
|---|---|---|
| SIB4 | Inter-frequency cell reselection message | Providing co-frequency carrier-related cell reselection parameters and a list of inter-frequency neighboring cells. |
| SIB5 | Inter-system cell reselection message (E-UTRAN) | Providing E-UTRAN cell reselection-related parameters and relevant carrier information. |
| SIB6 | ETWS ( Earthquake and Tsunami Warning System, Earthquake and Tsunami Warning System) main notification message | Providing the main notification message for the earthquake and tsunami warning system. |
| SIB7 | ETWS auxiliary notification message | Providing the secondary notification message for the earthquake and tsunami warning system, supporting segmented transmission. |
| SIB8 | Commercial mobile alert service (Commercial Mobile Alert Service, CMAS) alert notification message | Providing commercial terminal alert services. |
| SIB9 | Time message | Providing coordinated universal time (Coordinated Universal Time, UTC), GPS timing, and local time for synchronizing the UE clock. |

The preamble root sequence is a ZC (Zadoff-Chu) root sequence. Due to the excellent properties of the ZC root sequence, such as constant amplitude, zero autocorrelation, and low cross-correlation, the ZC root sequence is usually configured to generate preamble sequences. Specifically, by performing a cyclic shift operation on the ZC root sequence, a set of orthogonal preamble sequences can be generated. For example, in the 5G mobile communication network, the ZC root sequences in the length of 139/839 are supported, with 64 preamble sequence resources allocated for each cell, and the cyclic shift values are determined based on the cell scale. When a ZC root sequence cannot generate enough preamble sequence resources through cyclic shifts, additional root sequences are required.

Partitioned cell granularity information is configured to characterize the cell partitioning situation, which includes the number of partitioned areas in the cell and a radius of each partitioned area. The more partitioned areas in the cell there are, the fewer preamble root sequences are required for the cell, resulting in better performance. Therefore, in the embodiment of the present disclosure, the partitioned cell granularity information can be set according to the needs of the situation.

The term "exemplary" used below means "used as an example, as an embodiment, or for illustration". Any embodiment described as "exemplary" should not be interpreted as being superior or better than other embodiments.

The terms "first" and "second" herein are used for descriptive purposes only and should not be understood as indicating or implying relative importance or impliedly indicating the number of the technical features referred to. Thus, features labeled as "first" or "second" may explicitly or implicitly include one or more features. In the description of the embodiments of the present disclosure, unless otherwise specified, the term "multiple" means two or more.

The design concept of the embodiments of the present disclosure is briefly introduced below:

Random access is a fundamental process in a mobile communication system, which is used to achieve uplink time synchronization for terminals and establish initial wireless links. During a random access process, a terminal needs to first send a preamble sequence to a network device, and the network device detects the preamble sequence to achieve time synchronization and establish an initial wireless link. Therefore, the preamble sequence sent by the terminal and preamble detection performance of the network device will affect the access rate directly.

Currently, in a mMTC scenario of the 6G mobile communication network, the service type mainly includes small data packets. To avoid severely impacting spectrum efficiency, the preamble sequence needs to be set as not excessively long. At the same time, due to the excellent properties of the ZC root sequence, such as constant amplitude, zero autocorrelation, and low cross-correlation, the ZC root sequence is usually configured to generate preamble sequences. For preambles with length constraints, the orthogonal preamble sequence resources that can be generated by a single ZC root sequence are limited. Therefore, in order to meet the demand for preamble sequence resources, it will inevitably be necessary to use more ZC root sequences.

At the same time, in the mMTC scenario of the 6G mobile communication network, there are massive terminals, and the communication scale thereof has increased tenfold or more compared to that of the 5G mobile communication network. Therefore, it will inevitably require more preamble sequence resources; otherwise, serious preamble collision issues will arise.

In summary, in the mMTC scenario of the 6G mobile communication network, in order to meet various demands, more preamble sequence resources are needed, and the preamble sequences cannot be excessively long. However, the increase in the number of preamble sequence resources and the length constraints of the preamble sequences will lead to the increase in the number of ZC root sequences required by the cell. In cases where the number of ZC root sequences required by the cell increases, although the cross-correlation between two coprime ZC root sequences is very low, the number of preamble sequences, determined based on different ZC root sequences, transmitted simultaneously by massive terminals is large. This will lead to the gradual accumulation of this low cross-correlation and become serious cross-correlation interference that cannot be ignored, causing a decrease in preamble detection performance.

Therefore, in the 6G mMTC scenario, how to reduce the cross-correlation interference of the preamble sequences, enhance the preamble detection performance, and improve the access performance is a technical problem that needs to be solved at present.

In light of this, embodiments of the present disclosure provide a random access preamble sequence generation method and apparatus, a device, and a storage medium. The terminal receives candidate cyclic shift values and corresponding candidate preamble root sequences sent by a network device and selects a target cyclic shift value and a corresponding target preamble root sequence based on location information of the terminal itself in the cell. Based on the target cyclic shift value and the target preamble root sequence, the terminal generates a random access preamble sequence, which can prevent the terminal from selecting an incorrect cyclic shift value and a corresponding preamble root sequence, thus preventing the terminal from failing to access due to selecting a smaller cyclic shift value and a corresponding preamble root sequence, as well as preventing the exacerbation of preamble collisions and cross-correlation interference of preamble sequences due to selecting a larger cyclic shift value and a corresponding preamble root sequence.

In the embodiments of the present disclosure, the candidate cyclic shift values are determined by the network device based on the partitioned cell granularity information. The candidate preamble root sequences are allocated by the network device for the candidate cyclic shift values, and the number of candidate preamble root sequences is determined based on the total number of preamble sequence resources in the cell and the number of candidate cyclic shift values. The number of the cyclic shift values determined based on the partitioned cell granularity information is greater than that determined by related implementations, and further, the number of the candidate preamble root sequences determined based on multiple candidate cyclic shift values and the total number of preamble sequence resources of the cell is reduced compared to the number of the candidate preamble root sequences determined by related implementations. Under the condition of the reduction of the number of the required preamble root sequences in the cell, it further reduces the cross-correlation interference of the preamble sequences, enhances the preamble detection performance, and improves the access performance.

Considering that in the 5G preamble configuration scheme, each cell needs to generate 64 PRACH (Physical Random Access Channel, Physical Random Access Channel) preamble sequences in length of $L_{RA}$, the preamble sequence set $S = \{x_{u,v}(n)\}_{u,v}$ is generated through the PRACH logical root sequence number u and the cyclic shift amount $C_v$; where each preamble sequence in the preamble sequence set S includes corresponding u and v values, where n is the sequence element number of each preamble sequence, $n=0,1,...,(L_{RA}-1)$; and the cyclic shift amount $C_v$ is the total cyclic shift length of a certain sequence relative to the PRACH logical root sequence, $C_v$ = the number of cycles v * the shift value per cycle $N_{CS}$.

For a PRACH logical root sequence number, the number of preamble sequences generated after cyclic shifting is: $N = \lfloor L_{RA}/N_{CS} \rfloor$. If the number of preamble sequences generated by a PRACH logical root sequence corresponding to a logical root sequence number u is N, where N < 64, the PRACH logical root sequence corresponding to the next PRACH logical root sequence number is selected to continue generating a preamble sequence until the number requirement is met. The preamble sequence is generated as follows: $x_{u,v} = x_u((n + C_v)\bmod L_{RA})$; where mod is the modulus operation, and $x_u$ is a sequence with the value of v being 0.

The calculation of the cyclic shift amount $C_v$ is related to whether it is for a restriction set, and the setting of the cyclic shift restriction set is mainly to ensure the reception performance of random access in high-speed scenarios. However, for the 6G mMTC scenario, generally only low-speed scenarios need to be considered. Therefore, the calculation formula of the $C_v$ is as follows:

$$C_v = \begin{cases} vN_{CS}, v = 0,1,2,\ldots, \left\lfloor \dfrac{L_{RA}}{N_{CS}} \right\rfloor - 1, N_{CS} \neq 0 \\ 0. N_{CS} = 0 \end{cases}$$

For short preambles, the $N_{CS}$ of the subcarrier spacing is the same at 15kHz, 30kHz, 60kHz, and 120kHz, and is only related to the zero correlation domain configuration of the high-level signaling configuration, as shown in Table 4 for cyclic shift values of short preambles:

Table 4

| Zero correlation domain configuration | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| Unlimited set Ncs | 0 | 2 | 4 | 6 | 8 | 10 | 12 | 13 | 15 | 17 | 19 | 23 | 27 | 34 | 46 | 69 |

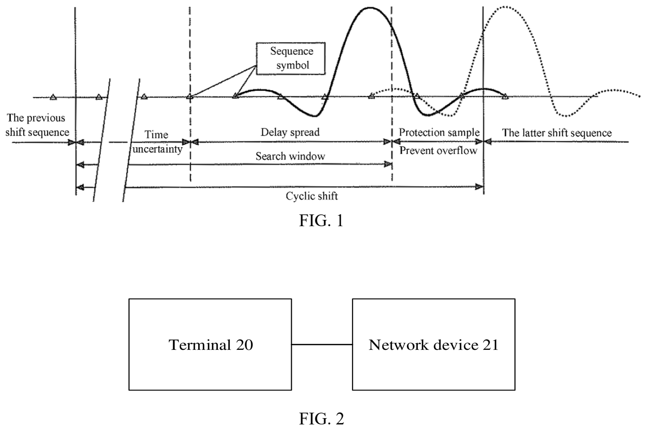

Since sequences obtained from cyclic shifting of different root sequences are not orthogonal, the performance of orthogonal sequences obtained from a single preamble root sequence cyclic shift will be better than that of non-orthogonal sequences. Therefore, the value of the $N_{CS}$ is very important. The minimum value of the $N_{CS}$ should be the minimum integer number of sequence sampling periods, which is greater than the delay spread and time uncertainty of the uplink asynchronous UE pluses a protection sample used for pulse shaping filter envelope overflow in the PRACH receiver, as shown in FIG. 1, which is a schematic diagram of a cyclic shift of the embodiment of the present disclosure.

Therefore, the value of the cyclic shift $N_{CS}$ can be expressed as:

$$N_{CS} \geq \left\lceil \left( \frac{20}{3} r - \tau_{ds} \right) \frac{L_{RA}}{T_{SEQ}} \right\rceil + n_g$$

Where r is a radius of the cell, $\tau_{ds}$ is the maximum delay spread, $T_{SEQ}$ is a sequence duration, and $n_g$ is the number of protection samples added by the receiver's pulse shaping filter.

In summary, when determining the candidate cyclic shift values based on the partitioned cell granularity information, the embodiment of the present disclosure determines the cyclic shift values of each partitioned area based on the radius of each partitioned area, and takes the cyclic shift values of each partitioned area as the candidate cyclic shift values of the cell.

The following describes the preferred embodiments of the present disclosure in conjunction with the drawings of the specification. It should be understood that the preferred embodiments described here are only for illustration and explanation of the present disclosure and are not intended to limit the present disclosure. Moreover, the embodiments and the features in the embodiments of the present disclosure can be combined with each other without conflict.

With reference to FIG. 2, which is a schematic diagram of an application scenario provided by an embodiment of the present disclosure. This application scenario includes: a terminal 20 and a network device 21; where the terminal 20 and the network device 21 perform communication through a communication network.

In an optional implementation, the communication network can be a wired network or a wireless network. Therefore, the terminal 20 and the network device 21 can be connected directly or indirectly through wired or wireless communication. For example, the terminal 20 and the network device 21 can be connected indirectly through a wireless access point, or the terminal 20 and the network device 21 can be connected directly through the Internet, which is not limited by the present disclosure here.

The technical solutions provided by the embodiments of the present disclosure are applicable not only to 6G systems but also to various systems, especially 5G systems. For example, an applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a long term evolution advanced (Long Term Evolution Advanced, LTE-A) system, a universal mobile telecommunication system (Universal Mobile Telecommunication System, UMTS), a worldwide interoperability for microwave access (Worldwide Interoperability for Microwave Access, WiMAX) system, a 5G new radio (New Radio, NR) system, etc. Each of these various systems includes a terminal and a network device. The system can also include a core network part, such as an evolved packet system (Evolved Packet System, EPS), a 5G system (5GS), etc.

The terminal involved in the embodiments of the present disclosure may refer to a device that provides voice and/or data connectivity to users, a handheld device with a wireless connection function, or other processing devices connected to a wireless modem, etc. In different systems, the terminal may also have different names. For example, in a 5G system, the terminal may be called a user equipment (User Equipment, UE). A wireless terminal can communicate with one or more core networks (Core Network, CN) via a radio access network (Radio Access Network, RAN). The wireless terminal can be a mobile terminal, such as a mobile phone (or known as a "cellular" phone), and a computer, which may be, for example, portable, pocket-sized, handheld, computer-built-in or vehicle-mounted mobile apparatuses, such as a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA) and other devices, which exchanges language and/or data with the radio access network. The wireless terminal may also be called a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), a user device (user device), which is not limited in the embodiments of the present disclosure.

The network device involved in the embodiments of the present disclosure is also named as a base station, and the based station may include multiple cells that provide services for terminals. According to different specific application occasions, the base station may also called an access point, or may refer to devices in communication with the wireless terminal through one or more sectors in an air interface in an access network, or devices with other names. The base station may be configured to interconvert a received air frame and an internet protocol (internet protocol, IP) packet and serves as a router between the wireless terminals and remaining parts of the access network, where the remaining parts of the access network may include an internet protocol (IP) communication network. The base station may further coordinate attribute management to the air interface. For example, the base stations involved in the embodiments of the present application may be base stations (Base Transceiver Station, BTS) in the global system for mobile communications (Global System for Mobile Communications, GSM) or code division multiple access (Code Division Multiple Access, CDMA), or network devices (NodeB) in wide-band code division multiple access (Wide-band Code Division Multiple Access, WCDMA), or evolutional network devices (evolutional Node B, eNB or e-NodeB) in a long term evolution (Long Term Evolution, LTE) system, or a base station (gNB) in a network architecture (next generation system), or a home evolved node B (Home evolved Node B, HeNB), a relay network node (relay node), a femto (femto), a pico (pico), etc., which is not limited in the embodiments of the present disclosure. In some network structures, the base station may include a centralized unit (Centralized Unit, CU) network node and a distributed unit (Distributed Unit, DU) network node, which may also be geographically separated.

Next, in conjunction with the application scenarios described above, a random access preamble sequence generation method provided by an exemplary implementation of the present disclosure will be described based on the drawings. It should be noted that the above application scenarios are only shown for the convenience of understanding the spirit and principles of the present disclosure, and the implementations of the present disclosure are not limited in this regard.

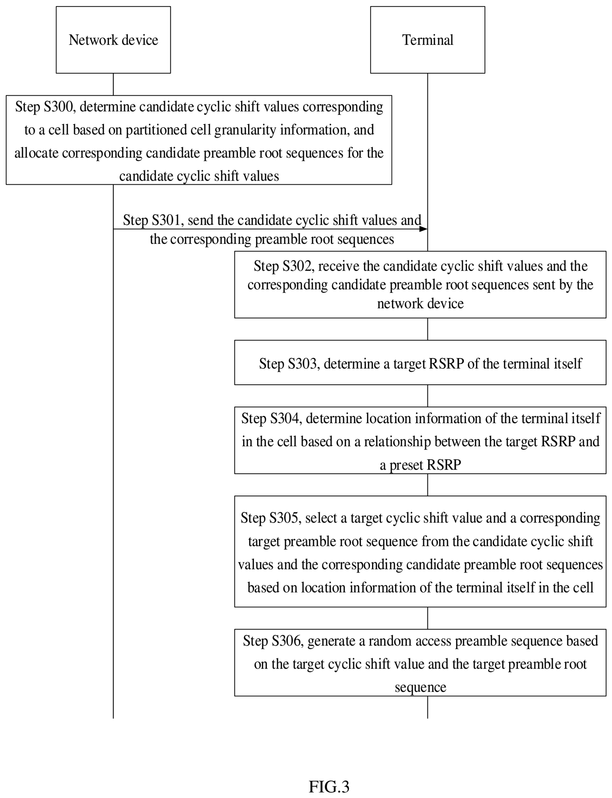

With reference to FIG. 3, FIG. 3 is a flowchart of a specific implementation for generating a random access preamble sequence provided by the embodiment of the present disclosure, which includes the following steps.

Step S300, the network device determines candidate cyclic shift values corresponding to a cell based on partitioned cell granularity information, and allocates corresponding candidate preamble root sequences for the candidate cyclic shift values.

In a possible implementation, the network device performs a partitioning operation on the cell based on the distance from the center of the cell to the edge of the cell, partitions the cell into multiple partitioned areas and obtains partitioned cell granularity information; where the partitioned cell granularity information includes the number of partitioned areas and the radius of each partitioned area. Further, the cyclic shift values corresponding to each partitioned area are determined based on the radius of each partitioned area, and the cyclic shift values corresponding to each partitioned area are used as the candidate cyclic shift values for the cell.

It should be noted that the number of candidate cyclic shift values corresponding to the cell is consistent with the number of partitioned areas in the cell; for example, if the cell is partitioned into three partitioned areas, the cell will correspond to three candidate cyclic shift values.

Step S301, the network device sends the candidate cyclic shift values and the corresponding preamble root sequences to the terminal in the cell.

In one possible implementation, the network device informs the terminal of the corresponding candidate cyclic shift values and the corresponding preamble root sequences for the cell by a broadcast message, that is, the available cyclic shift values and the corresponding preamble root sequences in the cell.

For example, the network device informs the terminal of the corresponding candidate cyclic shift values and the corresponding preamble root sequences for the cell based on the broadcast message and through the servingCellConfigCommon parameter in the SIB1; that is, adds the candidate cyclic shift values and the corresponding candidate preamble root sequences in the servingCellConfigCommon parameter in the SIB1, and broadcasts the SIB1 to the terminal.

Step S302, the terminal receives the candidate cyclic shift values and the corresponding candidate preamble root sequences sent by the network device.

Correspondingly, the terminal receives the candidate cyclic shift values and the corresponding candidate preamble root sequences for the cell broadcasted by the network device.

For example, the terminal receives the SIB1 broadcasted by the network device, and parses the SIB1 to obtain the candidate cyclic shift values and the corresponding candidate preamble root sequences carried in the servingCell-ConfigCommon parameter in the SIB1.

In the present disclosure, by broadcasting and configuring the candidate cyclic shift values and the corresponding candidate preamble root sequences through the network device, it can prevent the terminal from selecting incorrect cyclic shift values and corresponding preamble root sequences.

Step S303, the terminal determines a target RSRP of the terminal itself.

Step S304, the terminal determines location information of the terminal itself in the cell based on a relationship between the target RSRP and a preset RSRP.

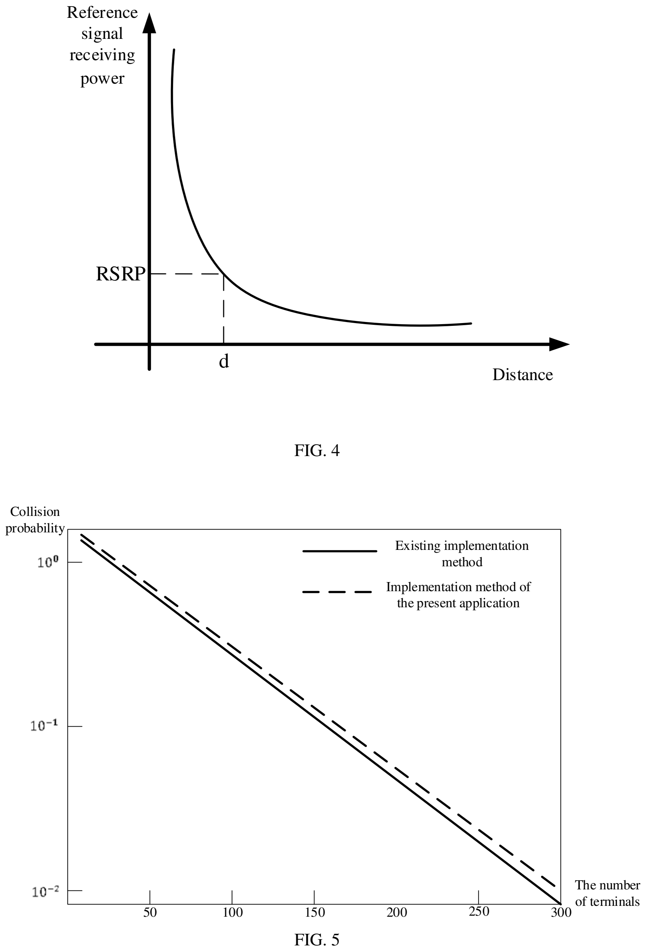

In the embodiment of the present disclosure, when determining the location information of the terminal in the cell, path loss is taken into account, and based on a path loss model: $\overline{P}(d) = P_0 - 10 n_p \log_{10}\left(\frac{d}{d_0}\right) n_p$ , where the $n_p$ is a path loss exponent , $\overline{P}(d)$ represents an average received power at a distance d from the transmission source, $P_0$ is an average power of the received signal at a location $d_0$ close to the transmission signal. It can be understood that the influence caused by multipath and shadow fading can be eliminated by calculating the average of the received signal power over a sufficiently long time. Therefore, the distance between positioning nodes can be measured through the RSRP, using the path loss model to convert transmission loss into distance, that is, the distance between the terminal and the center of the cell can be measured through the RSRP. With reference to FIG. 4, FIG. 4 is a schematic diagram of a relationship between a distance and a reference signal reception power provided by an embodiment of the present disclosure. From FIG. 4, it can be seen that the larger the RSRP, the smaller the distance between the two points. Therefore, in this embodiment of the present disclosure, a corresponding relationship between the RSRP and the distance can be set, for example, a first RSRP threshold is set for the center of the cell which is within a radius of r1 meters, a second RSRP threshold is set for the secondary center of the cell which is within a radius of r1~r2 meters, and a third RSRP threshold is set for the edge of the cell which is within a radius of r2~r3 meters.

Therefore, when determining location information of the terminal itself in the cell, the terminal first determines the actual measured target RSRP, and then compares the actual measured target RSRP with the preset RSRP set in the corresponding relationship between the RSRP and the distance. Based on the comparison result, it determines the location information of the terminal itself in the cell. For example, when the actual measured target RSRP matches the third RSRP threshold stored in the above corresponding relationship, it is determined that the terminal is located at the edge of the cell.

Step S305, the terminal selects a target cyclic shift value and a corresponding target preamble root sequence from the candidate cyclic shift values and the corresponding candidate preamble root sequences based on location information of the terminal itself in the cell.

Considering that the transmission delay for the terminal close to the center of the cell is smaller, while the transmission delay for the terminal close to the edge of the cell is larger; and for the terminal at the center of the cell, if a larger cyclic shift value and corresponding preamble root sequence are chosen, successful access can be achieved, but it occupies preamble resources of terminals at other positions and increases collisions and cross-correlation interference; and for the terminal at the edge of the cell, if a smaller cyclic shift value and a corresponding preamble root sequence are chosen, it will lead to unsuccessful access.

Therefore, in order to meet transmission performance, improve access rates, not affect the collision probability of the preamble sequence, and save resources etc., in the embodiment of the present disclosure, when selecting the target cyclic shift value and the corresponding preamble root sequence based on the position of the terminal in the cell, the terminal close to the center of the cell chooses a smaller cyclic shift value and a corresponding preamble root sequence, while the terminal close to the edge of the cell chooses a larger cyclic shift value and a corresponding preamble root sequence.

For example, in case that the location information indicates that the terminal is located at a center of the cell, the terminal will select, from the candidate cyclic shift values and the corresponding candidate preamble root sequences, a smallest candidate cyclic shift value as the target cyclic shift value and determine the corresponding target preamble root sequence;

in case that the location information indicates that the terminal is located at an edge of the cell, the terminal will select, from the candidate cyclic shift values and the corresponding candidate preamble root sequences, a largest candidate cyclic shift value as the target cyclic shift value and determine the corresponding target preamble root sequence.

Step S306, generate a random access preamble sequence based on the target cyclic shift value and the target preamble root sequence.

In one possible implementation, an cyclic shift operation is performed on the target preamble sequence based on the target cyclic shift value, to generate the random access preamble sequence.

In the embodiment of the present disclosure, the number of the candidate preamble root sequences corresponding to the cell is determined based on the total number of preamble sequence resources in the cell and the number of candidate cyclic shift values, thus reducing the number of preamble root sequences required by the cell, and further reducing cross-correlation interference of the preamble sequences.

Next, the situation, in the embodiment of the present disclosure, where the number of candidate preamble root sequences can be reduced based on the total number of preamble sequence resources in the cell and the number of candidate cyclic shift values will be explained.

In one possible implementation, when determining the number of candidate preamble sequences, first, based on the total number of preamble sequence resources and the number of candidate cyclic shift values in the cell, the total number of preamble sequence resources corresponding to each candidate cyclic shift value is determined; then for each candidate cyclic shift value, the corresponding total number of preamble sequence resources and the corresponding number of orthogonal preamble sequences are determined, and the ratio between the two is determined; and finally, based on the total sum of the ratios corresponding to all candidate cyclic shift values, the number of candidate preamble root sequences is determined.

For example, assuming there are 3 partitioned areas, and the cyclic shift values corresponding to respective partitioned areas are 13, 26, and 46; in the case of using a short preamble sequence of length 139, the center of the cell uses the preamble root sequence with a cyclic shift value of 13, which can generate 10 orthogonal preamble sequences; the middle of the cell uses the preamble root sequence with a cyclic shift value of 26, which can generate 5 orthogonal preamble sequences; and the edge of the cell uses the preamble root sequence with a cyclic shift value of 46, which can generate 3 orthogonal preamble sequences. Assuming the total number of preamble sequence resources is 64, and terminals randomly appear at various positions in the cell, at this time, the number of preamble sequence resources corresponding to each cyclic shift value is the same, that is, the total number of preamble sequence resources corresponding to each cyclic shift value is 22, and the number of candidate preamble root sequences is:

$$N_{root-new} = \left\lceil \frac{22}{10} + \frac{22}{5} + \frac{22}{3} \right\rceil = 14.$$

In related technologies, the cell is not partitioned, and the corresponding cyclic shift value for the cell is 46. When using a short preamble sequence of length 139, the number of orthogonal preamble sequences generated by cyclic shifting for each preamble root sequence is 3, and when the total number of preamble sequence resources in the cell is 64, the number of roots required for the cell is $N_{root-cur} = \frac{64}{3} = 22.$.

It can be seen that the number of preamble roots required for the cell is reduced, and the cross-correlation interference of the preamble sequences is further decreased.

It should be noted that the candidate preamble root sequences corresponding to the cell determined by the terminal can be sent by the network device or can be determined by the terminal itself based on the above implementation.

Since access performance is affected by both preamble sequence collisions and cross-correlation interference, in the embodiment of the present disclosure, while reducing the number of preamble roots required for the cell and achieving a reduction in cross-correlation interference of the preamble sequences, the issue of preamble sequence collisions is also considered. It has been verified that the implementation of the present disclosure does not increase the collision probability of the preamble sequence.

Next, the analysis process that the implementation of the present disclosure does not increase the collision probability of the preamble sequence will be explained.

Assuming there are k terminals accessing simultaneously, according to the relevant preamble sequence design method, each user randomly selects one sequence from 64 optional preamble sequences for transmission. Therefore, for any terminal, the probability that there is no collision for the selected preamble sequence is $\left(\frac{63}{64}\right)^{k-1}$. According to the design method of the preamble sequence in the implementation of the present disclosure, since it is assumed that the terminal randomly appears at various positions in the cell, for any terminal, only other terminals in the same area are likely to collide therewith. The number of terminals in each area can be considered as $\frac{k}{3}$, and the probability of no collision for the preamble sequence is $\left(\frac{21}{22}\right)^{\frac{k}{3}-1}$. With reference to FIG. 5, FIG. 5 illustratively provides an schematic diagram of analysis of the collision probability of the preamble sequence. It can be seen from FIG. 5 that the implementation of the present disclosure does not affect the collision probability of the preamble sequence.

In summary, in the present disclosure, the terminal selects the target cyclic shift value and the corresponding candidate preamble root sequence from the candidate cyclic shift values and the corresponding candidate preamble root sequences sent by the network device, it can prevent the terminal from selecting an incorrect cyclic shift value and a corresponding preamble root sequence; and when selecting the target cyclic shift value and the corresponding target preamble root sequence, the terminal performs the selection based on the location information of the terminal itself in the cell, further generates the random access preamble sequence based on the target cyclic shift value and the target preamble root sequence, preventing the terminal from failing to access due to selecting a smaller cyclic shift value and a corresponding preamble root sequence, as well as preventing the exacerbation of preamble collisions and cross-correlation interference of preamble sequences due to selecting a larger cyclic shift value and a corresponding preamble root sequence, and improving the transmission performance. And the number of the cyclic shift values determined based on the partitioned cell granularity information is greater than that determined by related implementations, and further, the number of the candidate preamble root sequences determined based on multiple candidate cyclic shift values and the total number of preamble sequence resources of the cell is reduced compared to the number of the candidate preamble root sequences determined by related implementations. Under the condition of the reduction of the number of the required preamble root sequences in the cell, it further reduces the cross-correlation interference of the preamble sequences, enhances the preamble detection performance, and improves the access performance.

In the present disclosure, after generating a random access preamble sequence based on the target cyclic shift value and target preamble sequence, the terminal sends a random access request to the network device. Upon receiving the random access request, the network device detects the preamble sequence to achieve time synchronization and establish an initial link.

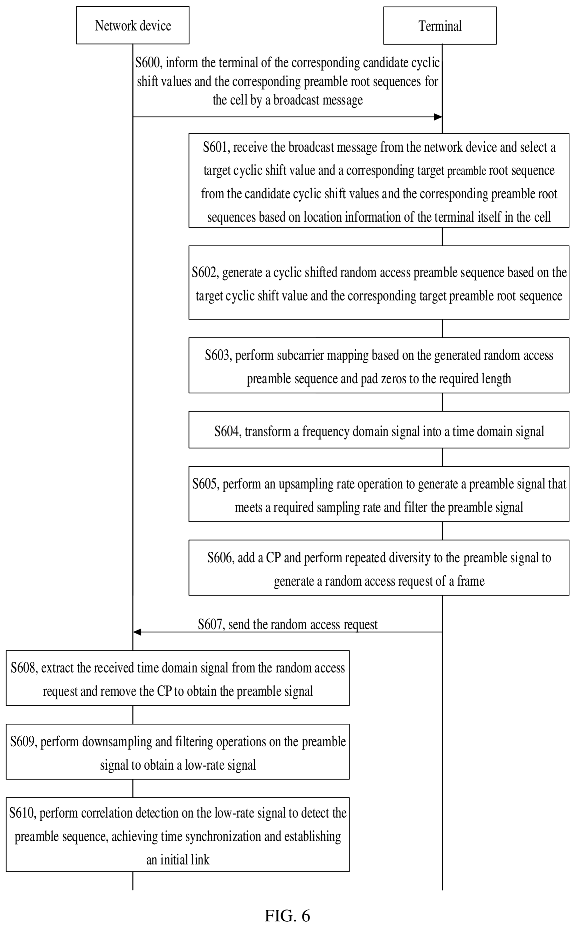

With reference to FIG. 6, FIG. 6 is a flowchart of a specific implementation for random access provided by an embodiment of the present disclosure, including the following steps:

step S600, the network device informs the terminal of the corresponding candidate cyclic shift values and the corresponding preamble root sequences for the cell by a broadcast message;

step S601, the terminal receives the broadcast message from the network device and selects a target cyclic shift value and a corresponding target preamble root sequence from the candidate cyclic shift values and the corresponding preamble root sequences based on location information of the terminal itself in the cell;

step S602, the terminal generates a cyclic shifted random access preamble sequence based on the target cyclic shift value and the corresponding target preamble root sequence;

step S603, the terminal performs subcarrier mapping based on the generated random access preamble sequence and pads zeros to the required length;

step S604, the terminal transforms a frequency domain signal into a time domain signal;

step S605, the terminal performs an upsampling rate operation to generate a preamble signal that meets a required sampling rate and filters the preamble signal;

step S606, the terminal adds a CP (Cyclic Prefix, Cyclic Prefix) and performs repeated diversity to the preamble signal to generate a random access request of a frame;

step S607, the terminal sends the random access request to the network device;

step S608, the network device extracts the received time domain signal from the random access request and removes the CP to obtain the preamble signal;

step S609, the network device performs downsampling and filtering operations on the preamble signal to obtain a low-rate signal;

step S610, the network device performs correlation detection on the low-rate signal to detect the preamble sequence, achieving time synchronization and establishing an initial link.

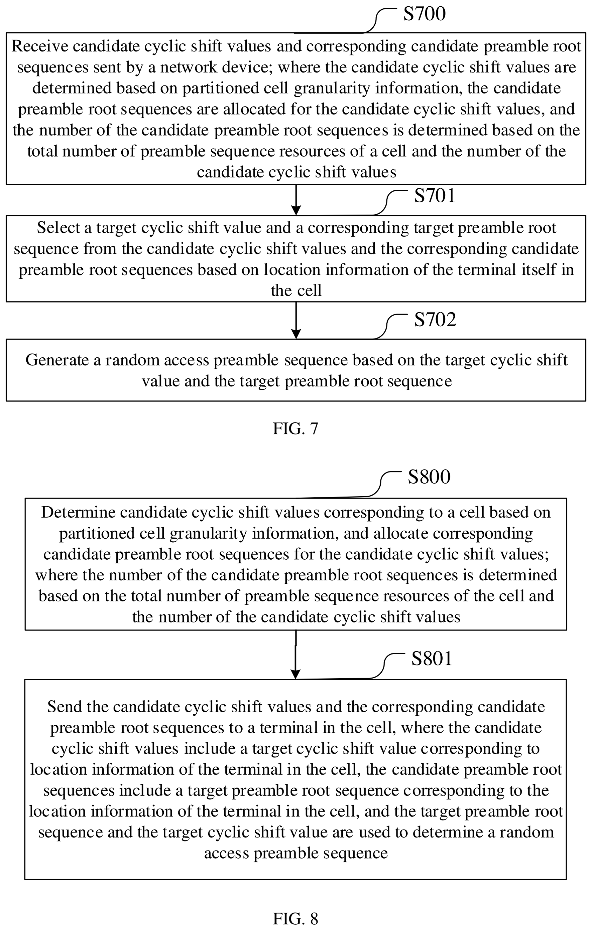

With reference to FIG. 7, FIG. 7 is a flowchart of a random access preamble sequence generation method provided by an embodiment of the present disclosure, applied to a terminal, specifically including the following steps:

step S700, receive candidate cyclic shift values and corresponding candidate preamble root sequences sent by a network device; where the candidate cyclic shift values are determined based on partitioned cell granularity information, the candidate preamble root sequences are allocated for the candidate cyclic shift values, and the number of the candidate preamble root sequences is determined based on the total number of preamble sequence resources of a cell and the number of the candidate cyclic shift values;

step S701, select a target cyclic shift value and a corresponding target preamble root sequence from the candidate cyclic shift values and the corresponding candidate preamble root sequences based on location information of the terminal itself in the cell;

step S702, generate a random access preamble sequence based on the target cyclic shift value and the target preamble root sequence.

In one possible implementation, the receiving the candidate cyclic shift values and the corresponding candidate preamble root sequences sent by the network device includes:

receiving a SIB1 broadcasted by the network device, where a servingCellConfigCommon parameter in the SIB1 carries the candidate cyclic shift values and the corresponding candidate preamble root sequences.

In one possible implementation, the location information of the terminal itself in the cell is determined by the following:

determining a target RSRP of the terminal;
determining the location information of the terminal itself in the cell based on a relationship between the target RSRP and a preset RSRP.

In one possible implementation, the selecting the target cyclic shift value and the corresponding target preamble root sequence from the candidate cyclic shift values and the corresponding candidate preamble root sequences based on the location information of the terminal itself in the cell includes:

in case that the location information indicates that the terminal is located at a center of the cell, selecting, from the candidate cyclic shift values and the corresponding candidate preamble root sequences, a smallest candidate cyclic shift value as the target cyclic shift value and determining the target preamble root sequence corresponding to the target cyclic shift value; or
in case that the location information indicates that the terminal is located at an edge of the cell, selecting, from the candidate cyclic shift values and the corresponding candidate preamble root sequences, a largest candidate cyclic shift value as the target cyclic shift value and determining the target preamble root sequence corresponding to the target cyclic shift value.

In one possible implementation, the number of the candidate preamble root sequences is determined by the following:

determining the number of preamble sequence resources corresponding to each candidate cyclic shift value based on the total number of the preamble sequence resources and the number of the candidate cyclic shift values;
determining a ratio between a corresponding number of the preamble sequence resources and a corresponding number of orthogonal preamble sequences for each candidate cyclic shift value;
determining the number of the candidate preamble root sequences based on a sum of ratios corresponding to all the candidate cyclic shift values.

With reference to FIG. 8, FIG. 8 is a flowchart of another random access preamble sequence generation method provided by an embodiment of the present disclosure, applied to a network device, specifically including the following steps:

step S800, determine candidate cyclic shift values corresponding to a cell based on partitioned cell granularity information, and allocate corresponding candidate preamble root sequences for the candidate cyclic shift values; where the number of the candidate preamble root sequences is determined based on the total number of preamble sequence resources of the cell and the number of the candidate cyclic shift values;
step S801, send the candidate cyclic shift values and the corresponding candidate preamble root sequences to a terminal in the cell, where the candidate cyclic shift values include a target cyclic shift value corresponding to location information of the terminal in the cell, the candidate preamble root sequences include a target preamble root sequence corresponding to the location information of the terminal in the cell, and the target preamble root sequence and the target cyclic shift value are used to determine a random access preamble sequence.

In one possible implementation, the sending the candidate cyclic shift values and the corresponding candidate preamble root sequences to the terminal includes:

adding the candidate cyclic shift values and the corresponding candidate preamble root sequences in a serving-CellConfigCommon parameter of a SIB1;
broadcasting the SIB1 to the terminal.

In one possible implementation, the determining the candidate cyclic shift values corresponding to the cell based on the partitioned cell granularity information includes:

determining a radius of each partitioned area based on the partitioned cell granularity information;
determining cyclic shift values corresponding to respective partitioned areas based on the radius of each partitioned area;

using the cyclic shift values corresponding to the respective partitioned areas as the candidate cyclic shift values corresponding to the cell.

In one possible implementation, the number of the candidate preamble root sequences is determined by the following:

determining the number of preamble sequence resources corresponding to each candidate cyclic shift value based on the total number of the preamble sequence resources and the number of the candidate cyclic shift values;
determining a ratio between a corresponding number of the preamble sequence resources and a corresponding number of orthogonal preamble sequences for each candidate cyclic shift value;
determining the number of the candidate preamble root sequences based on a sum of ratios corresponding to all the candidate cyclic shift values.

In the present disclosure, the network device configures multiple candidate cyclic shift values ($N_{CS}$) and the corresponding candidate preamble root sequences (ZC root sequences) for each cell. The network side informs, through a broadcast message, the terminal of the candidate cyclic shift values and the corresponding candidate preamble root sequences. The terminal located at the center of the cell selects a smaller candidate cyclic shift value as the target cyclic shift value and determines the corresponding target preamble root sequence, while the terminal located at the edge of the cell selects a larger candidate cyclic shift value as the target cyclic shift value and determines the corresponding target preamble root sequence. The overall number of preamble root sequences required for each cell is reduced, thereby decreasing the cross-correlation interferences of the preamble sequences without affecting the collision probability of the preamble sequences, and further improving terminal access performance and enhancing overall transmission performance.

Based on the same disclosed concept as that of the above method embodiment of the present disclosure, an embodiment of the present disclosure also provides a terminal, where the principle of the terminal to solve the problem is similar to that of the random access preamble sequence generation method implemented by the above terminal. Therefore, the implementation of the terminal can refer to the implementation of the random access preamble sequence generation method corresponding to the above terminal, and the repeated parts will not be elaborated.

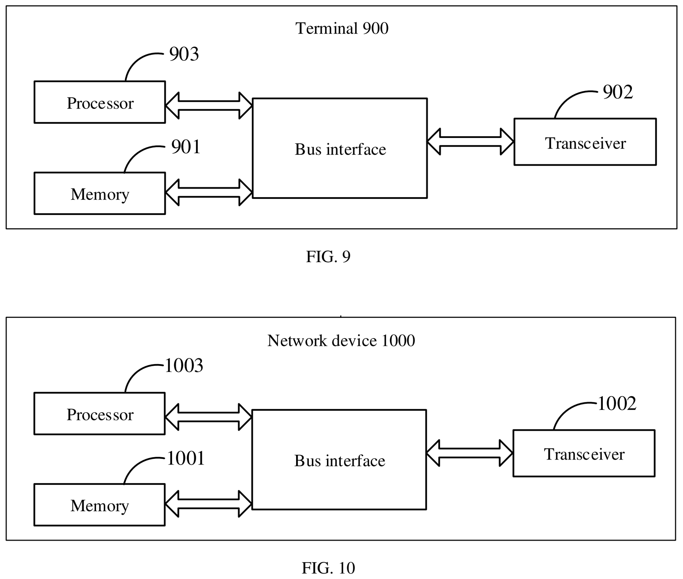

With reference to FIG. 9, FIG. 9 exemplarily provides a terminal 900 in an embodiment of the present disclosure, where the terminal 900 includes a memory 901, a transceiver 902, and a processor 903; where:

the memory 901 is configured to store a computer program;
the transceiver 902 is configured to send and receive data under the control of the processor 903;
the processor 903 is configured to read the computer program in the memory and perform the following operations:

receiving candidate cyclic shift values and corresponding candidate preamble root sequences sent by a network device; where the candidate cyclic shift values are determined based on partitioned cell granularity information, the candidate preamble root sequences are allocated for the candidate cyclic shift values, and the number of the candidate preamble root sequences is determined based on the total number of preamble sequence resources of a cell and the number of the candidate cyclic shift values;
selecting a target cyclic shift value and a corresponding target preamble root sequence from the candidate cyclic shift values and the corresponding candidate preamble root sequences based on location information of the terminal itself in the cell;
generating a random access preamble sequence based on the target cyclic shift value and the target preamble root sequence.

In one possible implementation, the processor 903 is specifically configured to:
receive a SIB1 broadcasted by the network device, where a servingCellConfigCommon parameter in the SIB1 carries the candidate cyclic shift values and the corresponding candidate preamble root sequences.

In one possible implementation, the processor 903 determines the location information of the terminal itself in the cell by the following:

determining a target RSRP of the terminal;
determining the location information of the terminal itself in the cell based on a relationship between the target RSRP and a preset RSRP.

In one possible implementation, the processor 903 is specifically configured to:

in case that the location information indicates that the terminal is located at a center of the cell, select, from the candidate cyclic shift values and the corresponding candidate preamble root sequences, a smallest candidate cyclic shift value as the target cyclic shift value and determine the target preamble root sequence corresponding to the target cyclic shift value; or

in case that the location information indicates that the terminal is located at an edge of the cell, select, from the candidate cyclic shift values and the corresponding candidate preamble root sequences, a largest candidate cyclic shift value as the target cyclic shift value and determine the target preamble root sequence corresponding to the target cyclic shift value.

**In** one possible implementation, the number of the candidate preamble root sequences is determined by the following:

determining the number of preamble sequence resources corresponding to each candidate cyclic shift value based on the total number of the preamble sequence resources and the number of the candidate cyclic shift values;

determining a ratio between a corresponding number of the preamble sequence resources and a corresponding number of orthogonal preamble sequences for each candidate cyclic shift value;

determining the number of the candidate preamble root sequences based on a sum of ratios corresponding to all the candidate cyclic shift values.

In FIG. 9, a bus architecture may include any number of interconnected buses and bridges, and specifically various circuits of one or more processors represented by the processor 903 and the memory represented by the memory 901 are linked together. The bus architecture can also link together various other circuits such as peripherals, voltage regulators, and power management circuits, which are all well known in the art and therefore no further description will be given herein. The bus interface provides an interface. The transceiver 902 may be a plurality of elements, i.e., including a transmitter and a receiver, providing a module for communicating with various other apparatuses over transmission media, where the transmission media include wireless channels, wired channels, optical cables, and other transmission media. For different user equipment, the interface may also be capable of connecting external or internal required devices, where the interface includes but not limited to keypads, displays, speakers, microphones, joysticks, etc.

The processor 903 is responsible for managing the bus architecture and general processing, and the memory 901 can store the data used by the processor 903 during operation.

Optionally, the processor 903 may be a CPU (Central Processing Unit), an ASIC (Application Specific Integrated Circuit, Application Specific Integrated Circuit), a FPGA (Field-Programmable Gate Array, Field-Programmable Gate Array), or a CPLD (Complex Programmable Logic Device, Complex Programmable Logic Device), and the processor may also adopt a multi-core architecture.

By calling the computer program stored in the memory, the processor 903 executes any method provided by the embodiments of the present disclosure according to the obtained executable instructions. The processor and the memory may also be physically separated.

Based on the same disclosed concept as that of the above method embodiment of the present disclosure, an embodiment of the present disclosure also provides a network device, where the principle of the network device to solve the problem is similar to that of the random access preamble sequence generation method implemented by the above network device. Therefore, the implementation of the network device can refer to the implementation of the random access preamble sequence generation method corresponding to the above network device, and the repeated parts will not be elaborated.

With reference to FIG. 10, FIG. 10 exemplarily provides a network device 1000 in an embodiment of the present disclosure, where the network device 1000 includes a memory 1001, a transceiver 1002, and a processor 1003; where:

the memory 1001 is configured to store a computer program;

the transceiver 1002 is configured to send and receive data under the control of the processor 1003;

the processor 1003 is configured to read the computer program in the memory and perform the following operations:

determining candidate cyclic shift values corresponding to a cell based on partitioned cell granularity information, and allocating corresponding candidate preamble root sequences for the candidate cyclic shift values; where the number of the candidate preamble root sequences is determined based on the total number of preamble sequence resources of the cell and the number of the candidate cyclic shift values;

sending the candidate cyclic shift values and the corresponding candidate preamble root sequences to a terminal in the cell, where the candidate cyclic shift values include a target cyclic shift value corresponding to location information of the terminal in the cell, the candidate preamble root sequences include a target preamble root sequence corresponding to the location information of the terminal in the cell, and the target preamble root sequence and the target cyclic shift value are used to determine a random access preamble sequence.

In one possible implementation, the processor 1003 is specifically configured to:

add the candidate cyclic shift values and the corresponding candidate preamble root sequences in a servingCell-ConfigCommon parameter of a SIB1;
broadcast the SIB1 to the terminal.

In one possible implementation, the processor 1003 is specifically configured to:

determine a radius of each partitioned area based on the partitioned cell granularity information;
determine cyclic shift values corresponding to respective partitioned areas based on the radius of each partitioned area;
use the cyclic shift values corresponding to the respective partitioned areas as the candidate cyclic shift values corresponding to the cell.

In one possible implementation, the number of the candidate preamble root sequences is determined by the following:

determining the number of preamble sequence resources corresponding to each candidate cyclic shift value based on the total number of the preamble sequence resources and the number of the candidate cyclic shift values;
determining a ratio between a corresponding number of the preamble sequence resources and a corresponding number of orthogonal preamble sequences for each candidate cyclic shift value;
determining the number of the candidate preamble root sequences based on a sum of ratios corresponding to all the candidate cyclic shift values.

In FIG. 10, a bus architecture may include any number of interconnected buses and bridges, and specifically various circuits of one or more processors represented by the processor 1003 and the memory represented by the memory 1001 are linked together. The bus architecture can also link together various other circuits such as peripherals, voltage regulators, and power management circuits, which are all well known in the art and therefore no further description will be given herein. The bus interface provides an interface. The transceiver 1002 may be a plurality of elements, i.e., including a transmitter and a receiver, providing a module for communicating with various other apparatuses over transmission media, where the transmission media include wireless channels, wired channels, optical cables, and other transmission media. For different user equipment, the interface may also be capable of connecting external or internal required devices, where the interface includes but not limited to keypads, displays, speakers, microphones, joysticks, etc.

The processor 1003 is responsible for managing the bus architecture and general processing, and the memory 1001 can store the data used by the processor 1003 during operation.

Optionally, the processor 1003 may be a CPU (Central Processing Unit), an ASIC (Application Specific Integrated Circuit, Application Specific Integrated Circuit), a FPGA (Field-Programmable Gate Array, Field-Programmable Gate Array), or a CPLD (Complex Programmable Logic Device, Complex Programmable Logic Device), and the processor may also adopt a multi-core architecture.

By calling the computer program stored in the memory, the processor 903 executes any method provided by the embodiments of the present disclosure according to the obtained executable instructions. The processor and the memory may also be physically separated.

Based on the same disclosed concept as that of the above method embodiment of the present disclosure, an embodiment of the present disclosure also provides a random access preamble sequence generation apparatus, where the principle of the apparatus to solve the problem is similar to that of the random access preamble sequence generation method implemented by the above terminal. Therefore, the implementation of the apparatus can refer to the implementation of the random access preamble sequence generation method corresponding to the above terminal, and the repeated parts will not be elaborated.

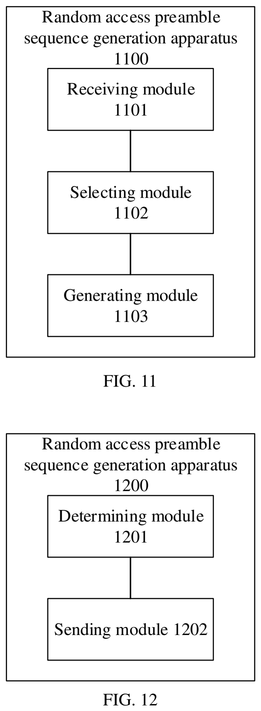

With reference to FIG. 11, FIG. 11 exemplarily provides a random access preamble sequence generation apparatus 1100 in an embodiment of the present disclosure, applied to a terminal, including:

a receiving module 1101, configured to receive candidate cyclic shift values and corresponding candidate preamble root sequences sent by a network device; where the candidate cyclic shift values are determined by a network device based on partitioned cell granularity information, the candidate preamble root sequences are allocated by the network device for the candidate cyclic shift values, and the number of the candidate preamble root sequences is determined based on the total number of preamble sequence resources of a cell and the number of the candidate cyclic shift values;

a selecting module 1102, configured to select a target cyclic shift value and a corresponding target preamble root sequence from the candidate cyclic shift values and the corresponding candidate preamble root sequences based on location information of the terminal itself in the cell;

a generating module 1103, configured to generate a random access preamble sequence based on the target cyclic shift value and the target preamble root sequence.

In one possible implementation, the receiving module 1101 is specifically configured to:
receive a SIB1 broadcasted by the network device, where a servingCellConfigCommon parameter in the SIB1 carries the candidate cyclic shift values and the corresponding candidate preamble root sequences.

In one possible implementation, the selecting module 1102 determines the location information of the terminal itself in the cell by the following:

determining a target reference signal receiving power (RSRP) of the terminal;

determining the location information of the terminal itself in the cell based on a relationship between the target RSRP and a preset RSRP.

In one possible implementation, the selecting module 1102 is specifically configured to:

in case that the location information indicates that the terminal is located at a center of the cell, select, from the candidate cyclic shift values and the corresponding candidate preamble root sequences, a smallest candidate cyclic shift value as the target cyclic shift value and determine the target preamble root sequence corresponding to the target cyclic shift value; or

in case that the location information indicates that the terminal is located at an edge of the cell, select, from the candidate cyclic shift values and the corresponding candidate preamble root sequences, a largest candidate cyclic shift value as the target cyclic shift value and determine the target preamble root sequence corresponding to the target cyclic shift value.

In one possible implementation, the number of the candidate preamble root sequences is determined by the following:

determining the number of preamble sequence resources corresponding to each candidate cyclic shift value based on the total number of the preamble sequence resources and the number of the candidate cyclic shift values;

determining a ratio between a corresponding number of the preamble sequence resources and a corresponding number of orthogonal preamble sequences for each candidate cyclic shift value;

determining the number of the candidate preamble root sequences based on a sum of ratios corresponding to all the candidate cyclic shift values.

Based on the same disclosed concept as that of the above method embodiment of the present disclosure, an embodiment of the present disclosure also provides a random access preamble sequence generation apparatus, where the principle of the apparatus to solve the problem is similar to that of the random access preamble sequence generation method implemented by the above network device. Therefore, the implementation of the apparatus can refer to the implementation of the random access preamble sequence generation method corresponding to the above network device, and the repeated parts will not be elaborated.

With reference to FIG. 12, FIG. 12 exemplarily provides a random access preamble sequence generation apparatus 1200 in an embodiment of the present disclosure, applied to a terminal, including:

a determining module 1201, configured to determine candidate cyclic shift values corresponding to a cell based on partitioned cell granularity information, and allocate corresponding candidate preamble root sequences for the candidate cyclic shift values; where the number of the candidate preamble root sequences is determined based on the total number of preamble sequence resources of the cell and the number of the candidate cyclic shift values;

a sending module 1202, configured to send the candidate cyclic shift values and the corresponding candidate preamble root sequences to the terminal in the cell, for the terminal to select, from the candidate preamble root sequences and the candidate cyclic shift values, a target preamble root sequence and a corresponding target cyclic shift value based on location information of the terminal itself in the cell, and to determine a random access preamble sequence based on the target preamble root sequence and the target cyclic shift value.

In one possible implementation, the sending module 1202 is specifically configured to:

add the candidate cyclic shift values and the corresponding candidate preamble root sequences in a servingCell-ConfigCommon parameter of a SIB1;

broadcast the SIB1 to the terminal.

In one possible implementation, the determining module 1201 is specifically configured to:

determine a radius of each partitioned area based on the partitioned cell granularity information;

determine cyclic shift values corresponding to respective partitioned areas based on the radius of each partitioned area;

use the cyclic shift values corresponding to the respective partitioned areas as the candidate cyclic shift values corresponding to the cell.

In one possible implementation, the number of the candidate preamble root sequences is determined by the following:

determining the number of preamble sequence resources corresponding to each candidate cyclic shift value based on the total number of the preamble sequence resources and the number of the candidate cyclic shift values;

determining a ratio between a corresponding number of the preamble sequence resources and a corresponding number of orthogonal preamble sequences for each candidate cyclic shift value;

determining the number of the candidate preamble root sequences based on a sum of ratios corresponding to all the candidate cyclic shift values.

It should be noted that the division of modules in the embodiments of the present disclosure is as an example and is merely a logical function division. In actual implementation, there may be other division methods. In addition, each functional module in various embodiments of the present disclosure may be integrated into one processing module, or each module may exist physically alone, or two or more modules may be integrated into one module. The above integrated modules can be implemented in the form of hardware or software functional modules.

When the integrated module is implemented in the form of a software functional module and sold or used as an independent product, the integrated module may be stored in a computer readable storage medium. Based on such an understanding, the technical solutions of the present disclosure essentially or the part that contributes to the related art or all or a part of the technical solutions may be implemented in the form of a software product. The computer software product is stored in a storage medium and includes several instructions for instructing a computer device (which may be a personal computer, a server, a network device, or the like) or a processor (processor) to perform all or some steps of the methods described in the embodiments of the present disclosure. The foregoing storage medium includes any medium that can store a program code, such as a USB flash drive, a removable hard disk, a read-only memory (Read-Only Memory, ROM), a random access memory (Random Access Memory, RAM), a magnetic disk, or an optical disk, etc.

It should be noted that the above apparatus provided in the embodiment of the present disclosure can achieve all the method steps realized by the method embodiments mentioned above and can achieve the same technical effects. Therefore, the parts and beneficial effects in this embodiment that are the same as those in the method embodiments will not be specifically elaborated.

In addition, an embodiment of the present disclosure also provides a computer-readable storage medium, which stores a computer program that enables a computer to execute any of the random access preamble sequence generation methods mentioned above.

The computer-readable storage medium may be any available medium or data storage device that the computer can access, including but not limited to a magnetic memory (such as a floppy disk, a hard disk, a tape, a magneto-optical disk (MO), etc.), an optical memory (such as a CD, a DVD, a BD, a HVD, etc.), and a semiconductor memory (such as a ROM, an EPROM, an EEPROM, a non-volatile memory (NAND FLASH), a solid state drive (SSD)), etc.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied in one or more computer-usable storage media (including, but not limited to, a magnetic disk memory, CD-ROM, an optical memory, and the like) having a computer-usable program code embodied therein.

The present disclosure is described with reference to flow charts and/or block diagrams of the methods, the device (systems), and the computer program products according to the present disclosure. It will be understood that each process and/or block in the flow charts and/or block diagrams, and combinations of processes and/or blocks in the flow charts and/or block diagrams, can be implemented by computer program instructions. These computer program instructions may be provided to a processor of a general-purpose computer, a special-purpose computer, an embedded processor, or other programmable data processing device to produce a machine, such that the instructions executed by the processor of the computer or other programmable data processing device produce means for implementing the functions specified in a process or processes in the flow chart and/or in a block or blocks in the block diagram.

These processor program instructions may also be stored in a computer-readable memory that causes a computer or other programmable data processing device to operate in a particular manner, such that instructions stored in the computer-readable memory generates a manufactured product including an instruction means. The instruction means implements the function specified in one process or multiple processes in the flow chart and/or one block or multiple blocks in the block diagram.

These computer program instructions may also be loaded into a computer or other programmable data processing devices, causing a series of operational steps to be performed in the computer or other programmable devices to produce computer-implemented processing, thereby causing the instructions that are executed in the computer or other programmable device to provide steps for implementing the functions specified in a process or processes of the flow charts and/or a block or blocks of the block diagrams.

Obviously, those skilled in the art can make various changes and modifications to the present disclosure without departing from the spirit and scope of the present disclosure. In this way, if these changes and modifications of the present disclosure fall within the scope of the claims and equivalent technologies of the present disclosure, the present disclosure is also intended to include these changes and modifications.

**Claims**

1. A random access preamble sequence generation method, applied to a terminal, comprising:

   receiving candidate cyclic shift values and corresponding candidate preamble root sequences sent by a network device; wherein the candidate cyclic shift values are determined based on partitioned cell granularity information, the candidate preamble root sequences are allocated for the candidate cyclic shift values, and the number of the candidate preamble root sequences is determined based on the total number of preamble sequence resources of a cell and the number of the candidate cyclic shift values;
   selecting a target cyclic shift value and a corresponding target preamble root sequence from the candidate cyclic shift values and the corresponding candidate preamble root sequences based on location information of the terminal itself in the cell;
   generating a random access preamble sequence based on the target cyclic shift value and the target preamble root sequence.

2. The method according to claim 1, wherein the receiving the candidate cyclic shift values and the corresponding candidate preamble root sequences sent by the network device comprises:
   receiving a system information block 1 (SIB1) broadcasted by the network device, wherein a service cell common configuration (servingCellConfigCommon) parameter in the SIB1 carries the candidate cyclic shift values and the corresponding candidate preamble root sequences.

3. The method according to claim 1, wherein the location information of the terminal itself in the cell is determined by the following:

   determining a target reference signal received power (RSRP) of the terminal;
   determining the location information of the terminal itself in the cell based on a relationship between the target RSRP and a preset RSRP.

4. The method according to claim 1 or 3, wherein the selecting the target cyclic shift value and the corresponding target preamble root sequence from the candidate cyclic shift values and the corresponding candidate preamble root sequences based on the location information of the terminal itself in the cell comprises:

   in case that the location information indicates that the terminal is located at a center of the cell, selecting, from the candidate cyclic shift values and the corresponding candidate preamble root sequences, a smallest candidate cyclic shift value as the target cyclic shift value and determining the target preamble root sequence corresponding to the target cyclic shift value; or
   in case that the location information indicates that the terminal is located at an edge of the cell, selecting, from the candidate cyclic shift values and the corresponding candidate preamble root sequences, a largest candidate cyclic shift value as the target cyclic shift value and determining the target preamble root sequence corresponding to the target cyclic shift value.

5. The method according to claim 1 or 2, wherein the number of the candidate preamble root sequences is determined by the following:

determining the number of preamble sequence resources corresponding to each candidate cyclic shift value based on the total number of the preamble sequence resources and the number of the candidate cyclic shift values;
determining a ratio between a corresponding number of the preamble sequence resources and a corresponding number of orthogonal preamble sequences for each candidate cyclic shift value;
determining the number of the candidate preamble root sequences based on a sum of ratios corresponding to all the candidate cyclic shift values.

6. A random access preamble sequence generation method, applied to a network device, comprising:

determining candidate cyclic shift values corresponding to a cell based on partitioned cell granularity information, and allocating corresponding candidate preamble root sequences for the candidate cyclic shift values; wherein the number of the candidate preamble root sequences is determined based on the total number of preamble sequence resources of the cell and the number of the candidate cyclic shift values;
sending the candidate cyclic shift values and the corresponding candidate preamble root sequences to a terminal in the cell, wherein the candidate cyclic shift values comprise a target cyclic shift value corresponding to location information of the terminal in the cell, the candidate preamble root sequences comprise a target preamble root sequence corresponding to the location information of the terminal in the cell, and the target preamble root sequence and the target cyclic shift value are used to determine a random access preamble sequence.

7. The method according to claim 6, wherein the sending the candidate cyclic shift values and the corresponding candidate preamble root sequences to the terminal comprises:

adding the candidate cyclic shift values and the corresponding candidate preamble root sequences in a servingCellConfigCommon parameter of a SIB1;
broadcasting the SIB1 to the terminal.

8. The method according to claim 6, wherein the determining the candidate cyclic shift values corresponding to the cell based on the partitioned cell granularity information comprises:

determining a radius of each partitioned area based on the partitioned cell granularity information;
determining cyclic shift values corresponding to respective partitioned areas based on the radius of each partitioned area;
using the cyclic shift values corresponding to the respective partitioned areas as the candidate cyclic shift values corresponding to the cell.

9. The method according to claim 6 or 7, wherein the number of the candidate preamble root sequences is determined by the following:

determining the number of preamble sequence resources corresponding to each candidate cyclic shift value based on the total number of the preamble sequence resources and the number of the candidate cyclic shift values;
determining a ratio between a corresponding number of the preamble sequence resources and a corresponding number of orthogonal preamble sequences for each candidate cyclic shift value;
determining the number of the candidate preamble root sequences based on a sum of ratios corresponding to all the candidate cyclic shift values.

10. A terminal, comprising: a memory, a transceiver, and a processor; wherein:

the memory is configured to store a computer program;
the transceiver is configured to transmit and receive data under control of the processor;
the processor is configured to read the computer program in the memory and perform the following operations:

receiving candidate cyclic shift values and corresponding candidate preamble root sequences sent by a network device; wherein the candidate cyclic shift values are determined based on partitioned cell granularity information, the candidate preamble root sequences are allocated for the candidate cyclic shift values, and the number of the candidate preamble root sequences is determined based on the total number of preamble sequence resources of a cell and the number of the candidate cyclic shift values;

selecting a target cyclic shift value and a corresponding target preamble root sequence from the candidate cyclic shift values and the corresponding candidate preamble root sequences based on location information of the terminal itself in the cell;

generating a random access preamble sequence based on the target cyclic shift value and the target preamble root sequence.

11. The terminal according to claim 10, wherein the processor is specifically configured to:
receive a SIB 1 broadcasted by the network device, wherein a servingCellConfigCommon parameter in the SIB1 carries the candidate cyclic shift values and the corresponding candidate preamble root sequences.

12. The terminal according to claim 10, wherein the processor determines the location information of the terminal itself in the cell by the following:

determining a target RSRP of the terminal;
determining the location information of the terminal itself in the cell based on a relationship between the target RSRP and a preset RSRP.

13. The terminal according to claim 10 or 12, wherein the processor is specifically configured to:

in case that the location information indicates that the terminal is located at a center of the cell, select, from the candidate cyclic shift values and the corresponding candidate preamble root sequences, a smallest candidate cyclic shift value as the target cyclic shift value and determine the target preamble root sequence corresponding to the target cyclic shift value; or

in case that the location information indicates that the terminal is located at an edge of the cell, select, from the candidate cyclic shift values and the corresponding candidate preamble root sequences, a largest candidate cyclic shift value as the target cyclic shift value and determine the target preamble root sequence corresponding to the target cyclic shift value.

14. The terminal according to claim 10 or 11, wherein the number of the candidate preamble root sequences is determined by the following:

determining the number of preamble sequence resources corresponding to each candidate cyclic shift value based on the total number of the preamble sequence resources and the number of the candidate cyclic shift values;

determining a ratio between a corresponding number of the preamble sequence resources and a corresponding number of orthogonal preamble sequences for each candidate cyclic shift value;

determining the number of the candidate preamble root sequences based on a sum of ratios corresponding to all the candidate cyclic shift values.

15. A network device, comprising: a memory, a transceiver, and a processor; wherein:

the memory is configured to store a computer program;
the transceiver is configured to transmit and receive data under control of the processor;
the processor is configured to read the computer program in the memory and perform the following operations:

determining candidate cyclic shift values corresponding to a cell based on partitioned cell granularity information, and allocating corresponding candidate preamble root sequences for the candidate cyclic shift values; wherein the number of the candidate preamble root sequences is determined based on the total number of preamble sequence resources of the cell and the number of the candidate cyclic shift values;

sending the candidate cyclic shift values and the corresponding candidate preamble root sequences to a terminal in the cell, wherein the candidate cyclic shift values comprise a target cyclic shift value corresponding to location information of the terminal in the cell, the candidate preamble root sequences comprise a target preamble root sequence corresponding to the location information of the terminal in the cell, and the target preamble root sequence and the target cyclic shift value are used to determine a random access preamble sequence.

16. The network device according to claim 15, wherein the processor is specifically configured to:

add the candidate cyclic shift values and the corresponding candidate preamble root sequences in a serving-CellConfigCommon parameter of a SIB1;
broadcast the SIB1 to the terminal.

17. The network device according to claim 15, wherein the processor is specifically configured to:

determine a radius of each partitioned area based on the partitioned cell granularity information;
determine cyclic shift values corresponding to respective partitioned areas based on the radius of each partitioned area;
use the cyclic shift values corresponding to the respective partitioned areas as the candidate cyclic shift values corresponding to the cell.

18. The network device according to claim 15 or 16, wherein the number of the candidate preamble root sequences is determined by the following:

determining the number of preamble sequence resources corresponding to each candidate cyclic shift value based on the total number of the preamble sequence resources and the number of the candidate cyclic shift values;
determining a ratio between a corresponding number of the preamble sequence resources and a corresponding number of orthogonal preamble sequences for each candidate cyclic shift value;
determining the number of the candidate preamble root sequences based on a sum of ratios corresponding to all the candidate cyclic shift values.

19. A random access preamble sequence generation apparatus, applied to a terminal, comprising:

a receiving module, configured to receive candidate cyclic shift values and corresponding candidate preamble root sequences sent by a network device; wherein the candidate cyclic shift values are determined based on partitioned cell granularity information, the candidate preamble root sequences are allocated for the candidate cyclic shift values, and the number of the candidate preamble root sequences is determined based on the total number of preamble sequence resources of a cell and the number of the candidate cyclic shift values;
a selecting module, configured to select a target cyclic shift value and a corresponding target preamble root sequence from the candidate cyclic shift values and the corresponding candidate preamble root sequences based on location information of the terminal itself in the cell;
a generating module, configured to generate a random access preamble sequence based on the target cyclic shift value and the target preamble root sequence.

20. The apparatus according to claim 19, wherein the selecting module is specifically configured to:

in case that the location information indicates that the terminal is located at a center of the cell, select, from the candidate cyclic shift values and the corresponding candidate preamble root sequences, a smallest candidate cyclic shift value as the target cyclic shift value and determine the target preamble root sequence corresponding to the target cyclic shift value; or
in case that the location information indicates that the terminal is located at an edge of the cell, select, from the candidate cyclic shift values and the corresponding candidate preamble root sequences, a largest candidate cyclic shift value as the target cyclic shift value and determine the target preamble root sequence corresponding to the target cyclic shift value.

21. The apparatus according to claim 19, wherein the number of the candidate preamble root sequences is determined by the following:

determining the number of preamble sequence resources corresponding to each candidate cyclic shift value based on the total number of the preamble sequence resources and the number of the candidate cyclic shift values;

determining a ratio between a corresponding number of the preamble sequence resources and a corresponding number of orthogonal preamble sequences for each candidate cyclic shift value;
determining the number of the candidate preamble root sequences based on a sum of ratios corresponding to all the candidate cyclic shift values.

22. A random access preamble sequence generation apparatus, applied to a network device, comprising:

a determining module, configured to determine candidate cyclic shift values corresponding to a cell based on partitioned cell granularity information, and allocate corresponding candidate preamble root sequences for the candidate cyclic shift values; wherein the number of the candidate preamble root sequences is determined based on the total number of preamble sequence resources of the cell and the number of the candidate cyclic shift values;
a sending module, configured to send the candidate cyclic shift values and the corresponding candidate preamble root sequences to a terminal in the cell, wherein the candidate cyclic shift values comprise a target cyclic shift value corresponding to location information of the terminal in the cell, the candidate preamble root sequences comprise a target preamble root sequence corresponding to the location information of the terminal in the cell, and the target preamble root sequence and the target cyclic shift value are used to determine a random access preamble sequence.

23. The device according to claim 22, wherein
the number of the candidate preamble root sequences is determined by the following:

determining the number of preamble sequence resources corresponding to each candidate cyclic shift value based on the total number of the preamble sequence resources and the number of the candidate cyclic shift values;
determining a ratio between a corresponding number of the preamble sequence resources and a corresponding number of orthogonal preamble sequences for each candidate cyclic shift value;
determining the number of the candidate preamble root sequences based on a sum of ratios corresponding to all the candidate cyclic shift values.

24. A computer-readable storage medium, wherein the computer-readable storage medium stores a computer program, and the computer program is configured to enable the computer to execute the method according to any one of claims 1 to 5, or to execute the method according to any one of claims 6 to 9.

The previous shift sequence

Time uncertainty

Sequence symbol

Delay spread

Search window

Protection sample

Prevent overflow

The latter shift sequence

Cyclic shift

FIG. 1

Terminal 20 ——— Network device 21

FIG. 2

| Network device | | Terminal |
|---|---|---|

Step S300, determine candidate cyclic shift values corresponding to a cell based on partitioned cell granularity information, and allocate corresponding candidate preamble root sequences for the candidate cyclic shift values

Step S301, send the candidate cyclic shift values and the corresponding preamble root sequences

Step S302, receive the candidate cyclic shift values and the corresponding candidate preamble root sequences sent by the network device

Step S303, determine a target RSRP of the terminal itself

Step S304, determine location information of the terminal itself in the cell based on a relationship between the target RSRP and a preset RSRP

Step S305, select a target cyclic shift value and a corresponding target preamble root sequence from the candidate cyclic shift values and the corresponding candidate preamble root sequences based on location information of the terminal itself in the cell

Step S306, generate a random access preamble sequence based on the target cyclic shift value and the target preamble root sequence

FIG.3

Reference
signal
receiving
power

RSRP

d

Distance

FIG. 4

Collision
probability

$10^0$

$10^{-1}$

$10^{-2}$

Existing implementation
method

Implementation method of
the present application

50          100          150          200          250          300

The number
of terminals

FIG. 5

| Network device | | Terminal |
|---|---|---|

S600, inform the terminal of the corresponding candidate cyclic shift values and the corresponding preamble root sequences for the cell by a broadcast message

S601, receive the broadcast message from the network device and select a target cyclic shift value and a corresponding target preamble root sequence from the candidate cyclic shift values and the corresponding preamble root sequences based on location information of the terminal itself in the cell

S602, generate a cyclic shifted random access preamble sequence based on the target cyclic shift value and the corresponding target preamble root sequence

S603, perform subcarrier mapping based on the generated random access preamble sequence and pad zeros to the required length

S604, transform a frequency domain signal into a time domain signal

S605, perform an upsampling rate operation to generate a preamble signal that meets a required sampling rate and filter the preamble signal

S606, add a CP and perform repeated diversity to the preamble signal to generate a random access request of a frame

S607, send the random access request

S608, extract the received time domain signal from the random access request and remove the CP to obtain the preamble signal

S609, perform downsampling and filtering operations on the preamble signal to obtain a low-rate signal

S610, perform correlation detection on the low-rate signal to detect the preamble sequence, achieving time synchronization and establishing an initial link

FIG. 6

S700

Receive candidate cyclic shift values and corresponding candidate preamble root sequences sent by a network device; where the candidate cyclic shift values are determined based on partitioned cell granularity information, the candidate preamble root sequences are allocated for the candidate cyclic shift values, and the number of the candidate preamble root sequences is determined based on the total number of preamble sequence resources of a cell and the number of the candidate cyclic shift values

S701

Select a target cyclic shift value and a corresponding target preamble root sequence from the candidate cyclic shift values and the corresponding candidate preamble root sequences based on location information of the terminal itself in the cell

S702

Generate a random access preamble sequence based on the target cyclic shift value and the target preamble root sequence

FIG. 7

S800

Determine candidate cyclic shift values corresponding to a cell based on partitioned cell granularity information, and allocate corresponding candidate preamble root sequences for the candidate cyclic shift values; where the number of the candidate preamble root sequences is determined based on the total number of preamble sequence resources of the cell and the number of the candidate cyclic shift values

S801

Send the candidate cyclic shift values and the corresponding candidate preamble root sequences to a terminal in the cell, where the candidate cyclic shift values include a target cyclic shift value corresponding to location information of the terminal in the cell, the candidate preamble root sequences include a target preamble root sequence corresponding to the location information of the terminal in the cell, and the target preamble root sequence and the target cyclic shift value are used to determine a random access preamble sequence

FIG. 8

Terminal 900

903

Processor

901

Memory

Bus interface

902

Transceiver

FIG. 9

Network device 1000

1003

Processor

1001

Memory

Bus interface

1002

Transceiver

FIG. 10

Random access preamble
sequence generation apparatus
1100

Receiving module
1101

Selecting module
1102

Generating module
1103

FIG. 11

Random access preamble
sequence generation apparatus
1200

Determining module
1201

Sending module 1202

FIG. 12

## INTERNATIONAL SEARCH REPORT

| | International application No. |
|---|---|
| | **PCT/CN2023/140558** |

**A. CLASSIFICATION OF SUBJECT MATTER**

H04W4/02(2018.01)i; H04W74/08(2024.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; VEN; CNKI; CNTXT; ENTXT; ENTXTC: 随机接入, 前导, 备选, 候选, 循环移位, 粒度, 位置, 根序列, 个数, Random access, preamble sequence, candidate, number, root serial, cyclic shift, position

**C. DOCUMENTS CONSIDERED TO BE RELEVANT**

| Category* | Citation of document, with indication, where appropriate, of the relevant passages | Relevant to claim No. |
|---|---|---|
| A | CN 111629394 A (HUAWEI TECHNOLOGIES CO., LTD.) 04 September 2020 (2020-09-04) description, paragraphs [0073]-[0307], and figures 1-4 | 1-24 |
| A | CN 108809597 A (BEIJING SAMSUNG COMMUNICATION TECHNOLOGY RESEARCH CO., LTD. et al.) 13 November 2018 (2018-11-13) entire document | 1-24 |
| A | CN 109792771 A (HUAWEI TECHNOLOGIES CO., LTD.) 21 May 2019 (2019-05-21) entire document | 1-24 |
| A | CN 101299620 A (HUAWEI TECHNOLOGIES CO., LTD.) 05 November 2008 (2008-11-05) entire document | 1-24 |
| A | WO 2021109040 A1 (HUAWEI TECHNOLOGIES CO., LTD.) 10 June 2021 (2021-06-10) entire document | 1-24 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 March 2024** | **23 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/140558**

| Patent document cited in search report | | | Publication date (day/month/year) | Patent family member(s) | | | Publication date (day/month/year) |
|---|---|---|---|---|---|---|---|
| CN | 111629394 | A | 04 September 2020 | None | | | |
| CN | 108809597 | A | 13 November 2018 | None | | | |
| CN | 109792771 | A | 21 May 2019 | WO | 2018058478 | A1 | 05 April 2018 |
| CN | 101299620 | A | 05 November 2008 | WO | 2008134957 | A1 | 13 November 2008 |
| WO | 2021109040 | A1 | 10 June 2021 | EP | 4057761 | A1 | 14 September 2022 |
| | | | | EP | 4057761 | A4 | 16 November 2022 |
| | | | | US | 2022312503 | A1 | 29 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211721347